# EUROPEAN PATENT SPECIFICATION

(11) **EP 2 958 950 B1**
(45) Date of publication and mention of the grant of the patent: **11.09.2019**
(21) Application number: 14754662.6
(22) Date of filing: 22.01.2014
(51) Int. Cl.: C08F 4/654, C08F 10/00, C08F 110/06, C08F 4/642, C08F 4/651, C08F 4/649

(54) **AN IMPROVED MAGNESIUM DICHLORIDE SUPPORTED TITANIUM CATALYST COMPOSITION FOR POLYOLEFIN POLYMERIZATION**
VERBESSERTE MAGNESIUMDICHLORIDGETRÄGERTE TITANKATALYSATORZUSAMMENSETZUNG ZUR OLEFINPOLYMERISATION
COMPOSITION AMÉLIORÉE DE CATALYSEUR DE TITANE SUPPORTÉ SUR DICHLORURE DE MAGNÉSIUM POUR LA POLYMÉRISATION DE POLYOLÉFINES

(30) Priority: 19.02.2013 IN 486MU2013
(43) Date of publication of application: 30.12.2015
(73) Proprietor: Reliance Industries Limited, Mumbai 400 021 Maharashtra (IN)
(72) Inventor: VYAS, Priyanshu Bharatkumar, Surat 395005 Gujarat (IN); PATIL, Harshad Ramdas, Surat 395009 Gujarat (IN); GUPTA, Virendra, Kumar, Navi Mumbai 400706 Maharashtra (IN)
(74) Representative: Petraz, Gilberto Luigi
(86) International application number: PCT/IN2014/000047
(87) International publication number: WO 2014/128715

(56) References cited:
- EP-A1- 1 881 012
- EP-A1- 2 535 372
- EP-B1- 2 279 216
- WO-A1-2006/007093
- WO-A1-2006/043985
- US-A- 4 567 155
- US-A- 5 204 303
- US-A1- 2011 183 097
- NICHAPAT SENSO ET AL: "The Influence of Mixed Activators on Ethylene Polymerization and Ethylene/1-Hexene Copolymerization with Silica-Supported Ziegler-Natta Catalyst", MOLECULES ONLINE, vol. 15, no. 12, 16 December 2010 (2010-12-16), pages 9323-9339, XP0055306825, DE ISSN: 1433-1373, DOI: 10.3390/molecules15129323
- LUCY CLOWES ET AL.: 'VANADIUM(I I I ) PHENOXYIMINE COMPLEXES FOR ETHYLENE OR-CAPROLACTONE POLYMERIZATION: MONONUCLEAR VER SUS BINUCLEAR PRE-CATALYSTS' CATAL . SCI . TECHNOL . vol. 3, 04 September 2012, pages 152 - 160, XP055261726

## Description

### FIELD OF THE DISCLOSURE

The present disclosure relates to a catalyst composition for the polymerization of olefins. More particularly, the present disclosure relates to a catalyst composition for the polymerization of olefins to produce polyolefins with controlled molecular weight distribution.

### BACKGROUND

The preparation of polyolefin by using titanium-magnesium based Ziegler-Natta catalyst is a known process. Since the first use of Ziegler-Natta catalyst for the production of polypropylene, several modifications/developments have been executed to improve their selectivity/productivity such as changes in catalyst precursor, internal and external electron donors and the like. An advantageous feature of these catalyst systems is the presence of more than one active site, which leads to a polyolefin with broad molecular weight distribution and nonuniform stereo-regularity.

In addition to improving the productivity or other characteristic features of these catalyst, several attempts have also been made for improving their stereoselectivity. In this attempt, Ziegler-Natta catalyst containing magnesium dichloride supported TiCl₄, with phthalate based internal donors shows high activity and controlled stereoselectivity, using various types of external electron donors such as alkoxysilane were developed. However, these catalyst systems are not self-extinguishing in nature.

The self-extinguishing nature of the catalyst plays a very important role during polymerization processes, particularly during a gas phase fluidized bed polymerization process. The gas phase polymerization processes are highly exothermic in nature, generating enormous amount of heat as the polymerization occurs. The high reaction temperature results into faster polymerization rate which further results into polymer agglomeration, operability problems, and/or reactor sheeting, fouling, chunk formation, compressor tripping, and the like. In an attempt to avoid chunk formation and the like, catalyst with excellent self-extinguishing properties are desired. For imparting the self-extinguishing property to the Ziegler-Natta catalyst compositions, the use of self-limiting agents (SLA) is widely adopted, for example the use of aliphatic or cycloaliphatic mono or poly carboxylic acids, alkyl-, aryl- or cycloalkyl (poly) ester, or a mixture of one or more aromatic mono or di-carboxylic acid or substituted derivatives and one or more alkoxysilane compound, as disclosed in United States Patent Nos. 7678868, 7381779 and 7491670.

### EXISTING KNOWLEDGE:

United States Patent Application No. 20060252894 discloses a polypropylene polymer having broad molecular weight distribution and better melt flow characteristic prepared by using a Ziegler-Natta catalyst system wherein different alkoxysilanses are employed as external electron donors. However, the aforementioned US application is completely silent on the self-extinguishing nature of the catalyst.

PCT Publication No. 1996004320 discloses a process for the preparation of polypropylene by using a Ziegler-Natta catalyst comprising a solid titanium catalyst, a mixture of alkyl aluminum compound as co-catalyst and an alkyl silane as an external electron donor. The obtained polypropylene exhibits control over the stereoregularity with low to moderate crystallinity.

Further, United States Patent No. 8043990 discloses a monoester based Ziegler-Natta catalyst system containing Ti-Mg based Pro-catalyst component, an organoaluminum compound as a co-catalyst component and a mixture of external electron donors. Polypropylene resin produced by using this catalyst system gives narrow molecular weight distribution (low polydispersity) without much reduction in catalyst productivity and xylene solubility of polypropylene. Another United States Patent Application No. 20110003952 discloses a monoester based Ziegler-Natta catalyst system containing a pro-catalyst component, an organo-aluminum compound as a co-catalyst component and Ethyl-4 ethoxy benzoate as a selectivity control agent. This patent application discloses a process for the polymerization of propylene to produce polypropylene having narrow molecular weight distribution. The disclosed catalyst system demonstrates high productivity and better hydrogen response.

Zakirov Marat I. et.al. (Vysokomolekulyarnye Soedineniya, B(2010), 52(10), 1835-1839) have studied the effect of internal and external electron donors on propylene polymerization in liquid monomer or in hexane solvent, in the presence of Ti-Mg based catalyst. Alkyl aluminum compounds are used to activate the Ti-Mg based catalyst. Furthermore, the activity and stereospecificity of catalyst system are evaluated and found to be dependent on the method of introduction of external electron donors.

Ziegler-Natta catalyst compositions as disclosed in the prior art demonstrate better kinetic control at higher temperatures and also effectively perform polymerization of olefins. However, for better process-ability, the broadening and narrowing of molecular weight distribution is desired in the polyolefins produced by using diester and monoester catalyst system respectively. The desired broadening and narrowing of molecular weight distribution is accomplished by a number of ways for example, by changes in the catalyst precursor, use of internal and external electron donor systems, varying the amount of catalyst employed, mixing separately prepared polyolefins having different molecular weights and the like.

Therefore, there always remains a need to provide a single catalyst system for the polymerization of olefins to produce polyolefins with controlled molecular weight distribution typically ranging from broad to narrow.

### OBJECTS:

Some of the objects of the present disclosure are discussed herein below.

It is an object of the present disclosure to ameliorate one or more problems of the prior art or to at least provide a useful alternative.

It is another object of the present disclosure to provide a catalyst composition having a self-extinguishing property for the polymerization of olefins to obtain polyolefins with a broad molecular weight distribution and better process-ability.

Still another object of the present disclosure is to provide a catalyst composition having improved hydrogen response for the polymerization of olefins to obtain polyolefins with a narrow molecular weight distribution and better process-ability.

A yet another object of the present disclosure is to provide polyolefins with a broad molecular weight distribution and better process-ability.

A further object of the present disclosure is to provide polyolefins with a narrow molecular weight distribution and process-ability.

Other objects and advantages of the present disclosure will be more apparent from the following description which is not intended to limit the scope of the present disclosure.

### SUMMARY:

In accordance with the present disclosure, there is provided a catalyst composition for the polymerization of olefins, said catalyst composition comprising;
i. a solid pro-catalyst component containing Ti, Mg and at least one internal electron donor;
ii. a co-catalyst component comprising a mixture of at least two trialkyl aluminum compounds selected from the group consisting of triethyl aluminum, triisobutyl aluminum and trioctyl aluminum, said co-catalyst mixture comprises at least one said trialkyl aluminum compound in an amount of at least 10 mole percent, based on the total amount of the co-catalyst mixture; and
iii. at least one external electron donor selected from the group of compounds consisting of alkoxysilanes and carboxylic acid esters.

Typically, the pro-catalyst component comprises a tetravalent titanium compound supported on a magnesium dichloride support.

Typically, the internal electron donor is at least one selected from the group of esters consisting of mono or di-aromatic carboxylic acid esters.

Typically, the internal electron donor is at least one selected from the group consisting of methyl benzoate, ethyl benzoate, n-propyl benzoate, i-propyl benzoate, n-butyl benzoate, i-butyl benzoate, dimethyl phthalate, diethyl phthalate, dipropyl phthalate, diisopropyl phthalate, dibutyl phthalate, diisobutyl phthalate, dihexyl phthalate and dioctyl phthalate

Typically, the co-catalyst mixture comprises two trialkyl aluminum compounds in a mole proportion varying between 1:9 and 9:1.

Typically, the molar ratio of the co-catalyst mixture and the external electron donor varies between 3:1 and 6:1.

Typically, the molar ratio of the co-catalyst mixture and the pro-catalyst varies between 230 and 270.

Typically, the external electron donor is a combination of at least one alkoxysilane and at least one carboxylic acid ester.

Typically, the alkoxysilane is at least one selected from the group consisting of cyclohexylmethyl dimethoxysilane, di-tert-butyldimethoxysilane, dicyclopentyldimethoxysilane, diphenyldimethoxysilane, diisopropyldimethoxysilane, di-n-propyldimethoxysilane, diisobutyldimethoxysilane, di-n-butyldimethoxysilane and n-propyl-trimethoxysilane.

Typically, the carboxylic acid ester is at least one selected from the group consisting of isopropyl palmitate (IPP), isopropyl laurate, isopropyl myristate, ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate and para-isopropoxy ethylbenzoate.

In accordance with another aspect, the present disclosure provides a process for preparing polyolefin with controlled molecular weight distribution, said process comprising the step of polymerizing olefin monomers in the presence of a catalyst composition as disclosed in the previous aspect of the present disclosure under polymerization reaction conditions of temperature ranging between 40 °C and 80 °C and of pressure ranging between 4 kg/cm² and 7 kg/cm² to obtain polyolefin with a pre-determined molecular weight distribution.

Typically, the catalyst composition as employed during the preparation of polyolefin comprises:
(i) a solid pro-catalyst component containing Ti, Mg and at least one internal electron donor selected from the group of mono carboxylic acid esters that include methyl benzoate, ethyl benzoate, n-propyl benzoate, i-propyl benzoate, n-butyl benzoate, i-butyl benzoate and any combinations thereof;
(ii) a co-catalyst component comprising a mixture of at least two trialkyl aluminum compounds selected from the group consisting of triethyl aluminum, triisobutyl aluminum and trioctyl aluminum, said co-catalyst mixture comprises at least one said trialkyl aluminum compound in an amount of at least 10 mole percent, based on the total amount of the co-catalyst mixture; and
(iii) at least one external electron donor comprising a mixture of at least one alkoxy silane and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate and para-isopropoxy ethylbenzoate

Typically, the polyolefin is characterized with a narrow molecular weight distribution having a polydispersity ranging between 5.0 and 6.2, said polydispersity being measured by Gel permeable chromatography (GPC).

Typically, the catalyst composition as employed during the preparation of polyolefin comprises:
i. a solid pro-catalyst component containing Ti, Mg and at least one internal electron donor selected from the group of di-carboxylic acid esters that include dimethyl phthalate, diethyl phthalate, dipropyl phthalate, diisopropyl phthalate, dibutyl phthalate, diisobutyl phthalate, dihexyl phthalate, dioctyl phthalate and any combinations thereof.
ii. a co-catalyst component comprising a mixture of at least two trialkyl aluminum compounds selected from the group consisting of triethyl aluminum, triisobutyl aluminum and trioctyl aluminum, said co-catalyst mixture comprises at least one said trialkyl aluminum compound in an amount of at least 10 mole percent, based on the total amount of the co-catalyst mixture; and
iii. at least one external electron donor comprising a mixture of at least one alkoxy silane and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl palmitate (IPP), isopropyl laurate and isopropyl myristate.

Typically, the polyolefin is characterized with a broad molecular weight distribution having a polydispersity ranging between 4.7 and 5.8 is obtained, said polydispersity index being measured by Gel permeable chromatography (GPC).

Typically, the olefin monomers are selected from the group consisting of ethylene, propylene, butylene and isoprene monomers, preferably propylene monomers.

Typically, the polyolefin is at least one selected from the group consisting of polyethylene, polypropylene, polybutylene and polyisoprene, preferably polypropylene.

### DETAILED DESCRIPTION:

Accordingly, a Zeigler-Natta catalyst composition for the polymerization of olefins to produce polyolefins with pre-determined molecular weight distribution is envisaged in the present disclosure. The pre-determined molecular weight distribution of polyolefin as obtained by using the Zeigler-Natta catalyst composition of the present disclosure typically ranges from broad to narrow molecular weight distribution (herein after refer as MWD).

As described earlier, several modifications in the prior-art Zeigler-Natta catalyst compositions are exemplified to produce polyolefin with either broad MWD or with narrow MWD such as changes in the catalyst precursor, selection and the use of internal/external electron donors and the like.

The Ziegler-Natta catalyst composition as employed for the purpose of controlling the MWD distribution of polyolefins ranging from broad to narrow in accordance with the present disclosure is based on the findings that the particular combination of alkyl aluminum compounds when used in a pre-determined mole proportion as a co-catalyst component, along with a pro-catalyst and an external electron donor components, exceptionally controls the MWD of polyolefins, as compared to the Ziegler-Natta catalyst compositions wherein a single tri-alkyl aluminum compounds as a co-catalyst component is used.

Further to employing particular combinations of trialkyl aluminum compounds in a particular weight proportions as a co-catalyst component, the selection of internal as well as external electron donors also play a very significant role in obtaining the polyolefin with controlled and pre-determined MWD.

In a first aspect, the present disclosure provides a catalyst composition for the polymerization of olefin to produce polyolefin with pre-determined molecular weight distribution, said catalyst composition comprising:
(i) a pro-catalyst component containing Ti and Mg compounds, and at least one internal electron donor;
(ii) a co-catalyst component comprising a mixture of at least two trialkyl aluminum compounds selected from the group consisting of triethyl aluminum (TEAl), triisobutyl aluminum (TIBAl) and trioctyl aluminum (TOAl) wherein the amount of at least one trialkyl aluminum compound in the co-catalyst component is at least 10 % by mole, based on the total amount of the co-catalyst component; and
(iii) at least one external electron donor selected from the group of compounds consisting alkoxysilanes and carboxylic acid esters.

The pro-catalyst component of the present catalyst composition comprises a suitable titanium compound supported on a magnesium dichloride support.

Further to Ti and Mg, the pro-catalyst component also comprises a suitable internal electron donor.

The preferred titanium compound in accordance with the present disclosure is a tetravalent titanium compound. The particularly preferred titanium compound is titanium halide that includes titanium tetrachloride (TiCl₄) and the like. Similarly, the particularly preferred magnesium compound is magnesium dichloride,

The internal electron donor as present in the catalyst composition of the present disclosure is preferably a carboxylic acid ester selected from the group of aromatic carboxylic acid esters. The aromatic carboxylic acid esters may be mono carboxylic acid esters or dicarboxylic acid esters.

As described earlier, the selection of internal electron donors to a great extent also influences the pre-determined MWD of polyolefins. For example, for preparing polyolefin with narrow MWD, internal electron donors based on mono-carboxylic acid esters are preferred. Similarly, for preparing polyolefin with broad MWD, internal electron donor based on di-carboxylic acid esters is preferred.

In accordance with one of the embodiments of the present disclosure, the internal electron donor is a monocarboxylic acid ester selected from the group of compounds consisting of methyl benzoate, ethyl benzoate, n-propyl benzoate, i-propyl benzoate, n-butyl benzoate and i-butyl benzoate.

In another embodiment of the present disclosure, the internal electron donor is a dicarboxylic acid ester selected from the group of compounds consisting of dimethyl phthalate, diethyl phthalate, dimethyl phthalate, dipropyl phthalate, diisopropyl phthalate, di-butyl phthalate, diisobutyl phthalate, dihexyl phthalate and dioctylphthalate.

The pro-catalyst component of the present catalyst composition is obtained from the reaction of at least one titanium compound and at least one magnesium compound carried out in the presence of at least one internal electron donor. The preparation of the pro-catalyst component of the present disclosure may be accomplished by employing any conventional methods for example the method as disclosed in US8283424, the details of which are hereby incorporated by reference in its entirety. However, the particular preferred method for the preparation of the pro-catalyst component comprising the following steps: (i) treating magnesium alkoxide with a first mixed solvent of TiCl₄ and chlorobenzene to form a first stage product; (ii) treating the first stage product with a second mixed solvent of TiCl₄ and chlorobenzene to form a second stage reaction product; (iii) treating the second stage reaction product with a third mixed solvent of TiCl₄ and chlorobenzene to form a third stage reaction product; and (iv) washing the third stage reaction product repeatedly with hexane to obtain final Ti-Mg containing pro-catalyst component.

In this process, the first mixed solvent as used in method step (i) is preferably a mixed solvent left at the end of step (ii) after the second stage treatment. The mixed solvent left at the end of method step (iii) after the third stage treatment is preferably used in method step (ii) as a second solvent mixture. The solvent mixture or effluent left after the first stage treatment in method step (i) is treated with benzoyl chloride so as to convert contaminants of formula TiCl₃OR in the effluent to an addition complex which is precipitated, filtered off and hydrolyzed to recover ethyl benzoate and to form Ti(OH)₄ as a side product. This treated effluent is then used as a third solvent mixture in method step (iii) to treat the second stage product.

The crux of the present disclosure lies in using a particular combination of trialkyl aluminum compounds as the co-catalyst mixture to control the pre-determined MWD of polyolefins. However, in addition to the particular combination, the inventors of the present disclosure have also studied the effect their mixing ratio on controlling the pre-determined MWD of polyolefins.

The co-catalyst component in accordance with the present disclosure is typically a mixture that comprises at least two alkyl aluminum compounds selected from the group consisting of trialkyl aluminum (TEAl), triisobutyl aluminum (TIBAl) and trioctyl aluminum (TOAl), wherein at least one alkyl aluminum compound in the co-catalyst component is present in an amount of at least 10% by mole, based on the total amount of the co-catalyst component.

Preferable, the co-catalyst component comprises a mixture of two tri-alkyl aluminum compounds in a mole proportion varying between 9:1 and 1:9.
Further to the co-catalyst component, the catalyst composition of the present disclosure also comprises a mixture of external electron donors as a selectivity control agent. The mixture of external electron donor comprises at least one alkoxysilane and at least one carboxylic acid ester.

The carboxylic acid ester is typically selected from the group of compounds consisting of isopropyl palmitate (IPP), isopropyl laurate, isopropyl myristate, ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate and para-isopropoxy ethylbenzoate and any combinations thereof.

The selection of carboxylic acid esters as an external electron donor during the polymerization of olefin depends upon the nature of internal electron donor present in the pro-catalyst component of the present catalyst composition.

In an embodiment of the present disclosure, wherein the pro-catalyst component based on mono-carboxylic acid ester based internal electron donor is employed during the polymerization of olefin, the external electron donor typically comprises a mixture of at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate, para-isopropoxy ethylbenzoate, and at least one alkoxysilane.

In another embodiment of the present disclosure, wherein the pro-catalyst component based on di-carboxylic acid ester based internal electron donor is employed during the polymerization of olefin, the external electron donor typically comprises a mixture of at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl palmitate (IPP), isopropyl laurate, isopropyl myristate, and at least one alkosilane compound.

The alkoxysilane compound as employed for the purpose of the present disclosure is typically selected from the group of compounds consisting cyclohexylmethyl dimethoxysilane, di-tert-butyldimethoxysilane, dicyclopentyldimethoxysilane, diphenyldimethoxysilane, diisopropyldimethoxysilane, di-n-propyldimethoxysilane, diisobutyldimethoxysilane, di-n-butyldimethoxysilane, n-propyl-trimethoxysilane and any combinations thereof. The preferred alkoxysilane is cyclohexylmethyl dimethoxysilane.

The co-catalyst component and the external electron donor are preferably added together in the polymerization reactor during the polymerization of olefin. The ratio of the amounts of the alkoxysilane and carboxylic acid ester, expressed in terms of molar ratio, ranges between 1:9 and 9:1, preferably between 1:9 and 1:4. Similarly, the molar ratio of the co-catalyst component to the external electron donor and co-catalyst component to pro-catalyst component typically varies between 3 to 6, and 230 to 270, respectively.

The catalyst composition in accordance with the present disclosure is used for the polymerization of olefin to produce polyolefin with pre-determined MWD. The pre-determined MWD of polyolefin is a controlled MWD typically ranging from broad to narrow.

In another aspect, the present disclosure provides a process for the polymerization of olefin to produce polyolefin with pre-determined MWD, said process comprising the steps of polymerizing olefin monomers in the presence of the catalyst composition of the present disclosure under the polymerization reaction conditions suitable to obtain polyolefin with pre-determined MWD.

The olefin polymerization in accordance with the present disclosure may be carried out by employing conventional methods known in the polymerization prior-art. However, in accordance with a particular preferred method, olefin monomer is contacted with the catalyst composition of the present disclosure under polymerization reaction conditions of temperature ranging between 40 °C and 80 °C, and pressure ranging between 4 kg/cm² and 7 kg/cm² for a time period varying between 1 hour and 2 hours to obtain polyolefin with pre-determined MWD. The polymerization of olefins in accordance with the present disclosure is preferable carried out in the presence of an inert hydrocarbon solvent such as n-hexane, heptane, decane, cyclohexane, isopentane and the like.

The polymerization of olefins, unless otherwise specified, shall mean any monomer containing at least one carbon-to-carbon double bond in their structure. The preferred olefins in accordance with the present disclosure are ethylene, propylene, butene isoprene, and combinations thereof, more preferably propylene.

As described earlier, the pre-determined MWD of polyolefin typically ranges from broad to narrow MWD, depending on the catalyst composition as employed during the polymerization of olefin monomers.

In accordance with one of the embodiments of the present disclosure, the pre-determined MWD of polyolefin is narrow MWD.

In accordance with another embodiment of the present disclosure, the pre-determined MWD of polyolefin is broad MWD.

In an embodiment of the present disclosure, wherein the polyolefin with narrow MWD is prepared, the Ziegler-Natta catalyst composition as employed during the polymerization of olefins typically comprises:
i. a pro-catalyst component containing Ti, Mg and at least one internal electron donor selected from the group of mono carboxylic acid esters that include methyl benzoate, ethyl benzoate, n-propyl benzoate, i-propyl benzoate, n-butyl benzoate, i-butyl benzoate and any combinations thereof;
ii. a co-catalyst component comprising a mixture of at least two trialkyl aluminum compounds selected from the group consisting of triethyl aluminum, triisobutyl aluminum and trioctyl aluminum, said co-catalyst mixture comprises at least one said trialkyl aluminum compound in an amount of at least 10 mole percent, based on the total amount of the co-catalyst mixture; and
iii. at least one external electron donor comprising a mixture of at least one alkoxy silane and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate, isobutyl-4-ethoxy benzoate and para-isopropoxy ethylbenzoate.

The polyolefin with narrow MWD as obtained in accordance with the present disclosure is characterized by a polydispersity index typically ranging between 5.0 and 6.2, as measured by Gel permeable chromatography (GPC).

The pro-catalyst component containing Ti, Mg and a mono-carboxylic acid ester based internal electron donors when employed along with a co-catalyst mixture and a mixed external electron donor for the polymerization of olefin to produce polyolefin with narrow MWD demonstrates improved hydrogen response as compared to the catalyst composition wherein only a single co-catalyst component is employed.

In another embodiment wherein polyolefin with broad MWD is prepared, the catalyst composition as employed during the polymerization of olefins typically comprises:
i. a solid pro-catalyst component containing Ti, Mg and at least one internal electron donor selected from the group of di-carboxylic acid esters that include dimethyl phthalate, diethyl phthalate, dipropyl phthalate, diisopropyl phthalate, dibutyl phthalate, diisobutyl phthalate, dihexyl phthalate, dioctyl phthalate and any combinations thereof.
ii. a co-catalyst component comprising a mixture of at least two trialkyl aluminum compounds selected from the group consisting of triethyl aluminum, triisobutyl aluminum and trioctyl aluminum, said co-catalyst mixture comprises at least one said trialkyl aluminum compound in an amount of at least 10 mole percent, based on the total amount of the co-catalyst mixture; and
iii. at least one external electron donor comprising a mixture of at least one alkoxy silane and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl palmitate (IPP), isopropyl laurate, and isopropyl myristate.

The polyolefin having broad MWD as obtained in accordance with the present disclosure is characterized with a polydispersity index typically ranging between 4.7 and 5.8, as measured by Gel permeable chromatography (GPC).

The pro-catalyst component containing Ti, Mg and a di-carboxylic acid ester based internal electron donors when used along with a co-catalyst mixture and a mixed external electron donor for the polymerization of olefin to produce polyolefin with broad MWD demonstrates significantly improved self extinguishing property as compared to the catalyst composition wherein only a single co-catalyst component is employed.

The polyolefin as prepared by using the Ziegler-Natta catalyst composition of the present disclosure may be at least one selected from the group consisting of polyethylene, polypropylene, polybutylene and polyisoprene. However, in accordance with a particular preferred embodiment of the present disclosure, the polyolefin is polypropylene. Polypropylene with pre-determined MWD ranging from broad to narrow as obtained in accordance with the present disclosure is colorless, odorless solid powder having melting point temperature ranging between 140°C and 165°C, degradation temperature is >300°C, said polypropylene is insoluble in water and having specific gravity 0.90 gm/cc, 60 - 175 J/m Izod and 900 - 1550 MPa Flexural Modulus.

The embodiments herein and the various features and advantageous details thereof are explained with reference to the non-limiting embodiments in the following description. Descriptions of well-known components and processing techniques are omitted so as to not necessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

### Example-1:

This example describes a process for the polymerization of propylene in the presence of a Ziegler-Natta catalyst composition that comprises a pro-catalyst component containing Ti, Mg and diester based internal electron donor, a single or mixture of co-catalyst component and a single external electron donor.

n-Hexane was charged into a 4 lit capacity CSTR reactor and kept under stirring at 400 rpm agitator speed. Afterwards, the reactor was charged with propylene in a quantity sufficient to saturate the solvent. Excess of propylene was vent off from the reactor. Then a pro-catalyst component containing Ti, Mg and a diester based internal electron donor was slurred in n-hexane solvent, and added to the reactor along with triethyl aluminum (TEAl), triisobutylaluminum (TIBAl) or trioctylaluminum (TOAl) as an co-catalyst with cyclohexylmethyl dimethoxysilane (CHMDMS) as an external electron donor, to obtain a reaction mixture. The co-catalyst/external electron donor molar ratio and co-catalyst/titanium molar ratio was maintained at 30±2 and 250±20 respectively. Initial temperature of the reactor was maintained at 40 °C. 240 ml of hydrogen along with propylene was added into the reactor. The obtained reaction mixture was then reacted at a temperature of 70±2 °C and pressure of 5±0.2 kg/cm²⁺, and the reaction was carried out for 2 hours.

Another set of experiment for the polymerization of propylene by using the pro-catalyst component containing Ti, Mg and a diester based internal electron donor was carried out wherein instead of employing a single tri-alkyl aluminum compound, a mixture of triethylaluminum and triisobutylaluminum or trioctylaluminum as a co-catalyst was employed along with the cyclohexylmethyl dimethoxysilane as an external electron donor.

This example also shows self-extinguishing studies of the catalyst composition as employed in the process of propylene polymerization. Here the catalyst system charging was carried out at 60°C. For the purpose of self-extinguishing study, the heating-cooling media circulation into reactor jacket was stopped when the heating-cooling media temperature reached at 70 °C. Thereafter, the reactor temperature was allowed to increase, since the polymerization is exothermic in nature. The reaction temperature was recorded till the temperature attains maximum limit and reaction carried out further lowers to 70 °C. The maximum temperature was recorded as the self-extinguishing temperature.

The details of catalyst productivity melt flow index, xylene soluble and self-extinguishing temperature are tabulated in table-1.

**Table 1**

| **Co-catalyst** | **Donor** | **Productivity (KgPP/gmcat)** | **XS (wt%)** | **MFI (gm/10 min)** | **Self-extinguishing temperature (°C)** |
|---|---|---|---|---|---|
| TEAl | CHMDMS | 11.0 | 1.9 | 6.7 | 98.0 |
| TIBAl | CHMDMS | 8.6 | 2.3 | 4.9 | 88.5 |
| TOAl | CHMDMS | 5.1 | 2.3 | 3.0 | 74.1 |
| 90%TEAl+10%TIBAl | CHMDMS | 10.8 | 2.1 | 5.5 | 90.2 |
| 90% TEAl+10% TOAl | CHMDMS | 10.5 | 2.3 | 4.5 | 80.0 |

The provided data clearly illustrates that when single-co-catalyst TEAl is employed both the catalyst productivity and the self-extinguishing temperature are high. However, in case of TOA1 the self-extinguishing characteristics of catalyst is improved but the productivity is reduced as compared to TEAl.
When a mixture of co-catalyst (90%TEAl+10%TOAl) is used, both the productivity and self-extinguishing characteristics of catalyst are improved as compared to TEAl/TOAl.

### Example-2:

Molecular weight distribution of polypropylene obtained in accordance with the process of example-1 was determined with a gel permeation chromatograph series PL 220 supplied by Polymer lab equipped with PLGEL 10 micron MIXED-B 300x7.5mm (3 columns), a differential refractive index and viscometric detector. The operating temperature of the instrument was maintained at a temperature of 160 °C. Eluting solvent was 1, 2, 4 trichlorobenzene. The calibration was done using known molecular weight polystyrene having molecular weight from 600 to 3 million g/mol. Refer to molecular weight distribution data as tabulated in Table-2.

**Table 2**

| **Co-catalyst** | **Donor** | **Mn x 10**^{**-** 4} | **Mw x 10⁻⁵** | **PDI** |
|---|---|---|---|---|
| TEAl | CHMDMS | 3.8 | 2.0 | 5.3 |
| TIBAl | CHMDMS | 4.6 | 2.3 | 5.0 |
| TOAl | CHMDMS | 5.7 | 2.7 | 4.7 |
| 90%TEAl+10%TlBAl | CHMDMS | 4.2 | 2.3 | 5.5 |
| 90%TEAl+10%TOAl | CHMDMS | 4.3 | 2.5 | 5.8 |

The data of table-2 showed broadening of molecular weight distribution of produced polypropylene using mixed co-catalyst with a single external electron donor system.

### Example-3:

This example describes a process for the polymerization of propylene in the presence of a catalyst composition that comprises a pro-catalyst component containing Ti, Mg and a diester based internal electron donor, a single or mixture of tri-alkyl aluminum compounds as a co-catalyst with mixture of external electron donors.

The slurry phase polymerization of propylene was carried out in the same manner as described in the process of example-1 by using the same pro-catalyst component containing Ti, Mg and a diester based internal electron donor, except the co-catalyst/external electron donor molar ratio was maintained at 5±0.5. The triethylaluminum, triisobutylaluminum or trioctylaluminum used as a single co-catalyst with cyclohexylmethyl dimethoxysilane and paraisopropoxy ethylbenzoate or isopropyl palmitate as an external electron donor mixture.

Another set of experiment for the polymerization of propylene by using the pro-catalyst component containing Ti, Mg and a diester based internal electron donor was carried out wherein instead of employing a single tri-alkyl aluminum compound, a mixture of triethylaluminum and triisobutylaluminum or trioctylaluminum as a co-catalyst was employed along with the mixture of cyclohexylmethyl dimethoxysilane and paraisopropoxy ethylbenzoate or isopropyl palmitate as an external electron donor.

The self-extinguishing studies of the catalyst composition as employed in the propylene polymerization process containing the pro-catalyst component, single or mixture of tri-alkyl aluminum compounds as a co-catalyst and single or mixture of external electron donors was carried out in the same manner as described in the process of example-1. The details of catalyst productivity, melt flow index, xylene solubility and self-extinguishing temperature are tabulated in table-3.

**Table 3:**

| **Co-catalyst** | **Donor** | **Productivity (KgPP/ gmcat)** | **XS (wt%)** | **MFI (gm/10 min)** | **Self-extinguishing temperature (°C)** |
|---|---|---|---|---|---|
| TEAl | 99%CHMDMS+1%PIPEB | 10.9 | 1.9 | 6.5 | 96.0 |
| TEAl | 10%CHMDMS+90%IPP | 10.2 | 2.6 | 3.5 | 91.1 |
| TIBAl | 99%CHMDMS+1%PIPEB | 8.5 | 2.3 | 4.6 | 86.2 |
| TIBAl | 10%CHMDMS+90%IPP | 7.5 | 2.5 | 3.0 | 81.2 |
| TOAl | 99%CHMDMS+1%PIPEB | 5.1 | 2.3 | 2.8 | 73.6 |
| TOAl | 10%CHMDMS+90%IPP | 4.3 | 2.3 | 2.2 | 68.4 |
| 90%TEAl+10%TIBAl | 99%CHMDMS+1%PIPEB | 10.6 | 2.1 | 5.4 | 88.8 |
| 90%TEAl+10%TlBAl | 10%CHMDMS+90%IPP | 10.0 | 2.4 | 3.6 | 83.6 |
| 90%TEAl+10%TOAl | 99%CHMDMS+1%PIPEB | 10.4 | 2.3 | 4.3 | 79.0 |
| 90%TEAl+10%TOAl | 10%CHMDMS+90%IPP | 9.8 | 2.2 | 3.7 | 75.2 |

It is clearly evident from the provided data, that when a mixture of co-catalyst (90%TEAl+10%TOAl) with mixed external electron donor system (10%CHMDMS+90%IPP) is employed both the productivity and self-extinguishing characteristics of catalyst are improved as compared to single co-catalyst (TEAl/TOAl).

### Examples-4:

Molecular weight distribution of polypropylene obtained in accordance with the process of example-3 was determined in same manner as in example-2.

**Table 4:**

| **Co-catalyst** | **Donor** | **Mn x 10^{- 4}** | **Mw x 10^{- 5}** | **PDI** |
|---|---|---|---|---|
| TEAl | 99%CHMDMS+1%PIPEB | 4.0 | 2.0 | 5.0 |
| TEAl | 10%CHMDMS+90%IPP | 4.9 | 2.5 | 5.1 |
| TIBAl | 99%CHMDMS+1%PIPEB | 4.7 | 2.4 | 5.1 |
| TIBAl | 10%CHMDMS+90%IPP | 5.0 | 2.6 | 5.2 |
| TOAl | 99%CHMDMS+1%PIPEB | 5.5 | 2.7 | 4.9 |
| TOAl | 10%CHMDMS+90%IPP | 5.4 | 2.8 | 5.2 |
| 90%TEAl+10%TlBAl | 99%CHMDMS+1%PIPEB | 4.2 | 2.3 | 5.5 |
| 90%TEAl+10%TlBAl | 10%CHMDMS+90%IPP | 4.8 | 2.7 | 5.6 |
| 90%TEAl+10%TOAl | 99%CHMDMS+1%PIPEB | 4.4 | 2.5 | 5.7 |
| 90%TEAl+10%TOAl | 10%CHMDMS+90%IPP | 4.9 | 2.8 | 5.7 |

The data tabulated showed that broader molecular weight distribution of produced polypropylene was achieved in the process which employs a single or a mixture of tri-alkyl aluminum compounds as the co-catalyst with a mixture of external electron donor system.

### Example-5:

This example describes a process for preparing polypropylene by using a Ziegler-Natta pro-catalyst containing Ti, Mg and a monoester based internal electron donor along with a single or mixture of co-catalyst with mixed external electron donor.

Slurry phase polymerization of propylene was carried out in the same manner as described in the process of example-1, except the use of a pro-catalyst component containing Ti, Mg and monoester base internal electron donor. Along with the pro-catalyst component, triethylaluminum or triisobutylaluminum or trioctylaluminum as a co-catalyst with cyclohexylmethyl dimethoxysilane and paraisopropoxy ethylbenzoate as an external electron donor was employed (co-catalyst/external electron donor mole ratio: 5±0.2, respectively) and reaction time is 1 hour.

Another set of experiment for the polymerization of propylene by using the pro-catalyst component containing Ti, Mg and a monoester based internal electron donor was carried out wherein instead of employing a single tri-alkyl aluminum compound, a mixture of triethylaluminum and triisobutylaluminum or trioctylaluminum as a co-catalyst was employed along with the mixture of cyclohexylmethyl dimethoxysilane and paraisopropoxy ethylbenzoate as an external electron donor.

The self-extinguishing study of the catalyst composition as employed in the propylene polymerization process was carried out in a similar manner as described in the processes of example-1 and example-3, except reaction time is 1 hr. For productivity, melt flow index, xylene solubility and self-extinguishing data, refer to table-5.

**Table 5:**

| **Co-catalyst** | **Donor** | **Productivity (KgPP/gmcat)** | **XS (wt%)** | **MFI (gm/10min)** | **Self-extinguishing temperature (°C)** |
|---|---|---|---|---|---|
| TEAl | 90%PIPEB+10%CHMDMS | 5.2 | 2.3 | 4.4 | 83 |
| 90%TEAl+10%TlBAl | 90%PIPEB+10%CHMDMS | 5.1 | 2.2 | 5.0 | 82 |
| 90%TEAl+10%TOAl | 90%PIPEB+10%CHMDMS | 5.1 | 2.2 | 5.6 | 82 |

The data tabulated in table-5 showed that hydrogen response is improved with similar self-extinguishing characteristics using mixed co-catalyst with a mixture of external electron donor system.

### Example-6:

Molecular weight distribution of polypropylene obtained in accordance with the process of example-5 was determined in same manner as in example-2 and example-4.

**Table 6:**

| **Co-catalyst** | **Donor** | **Mn x 10⁻⁴** | **Mw x 10⁻⁵** | **PDI** |
|---|---|---|---|---|
| TEAl | 90%PIPEB+10%CHMDMS | 4.5 | 2.8 | 6.2 |
| 90%TEAl+10%TlBAl | 90%PIPEB+10%CHMDMS | 4.8 | 2.6 | 5.4 |
| 90%TEAl+10%TOAl | 90%PIPEB+10%CHMDMS | 5.0 | 2.5 | 5.0 |

Results tabulated in table-6 indicate narrowing of molecular weight distribution of produced polypropylene using mixed co-catalyst and mixed external electron donor system.

### TECHNICAL ADVANTAGES:

The present disclosure relates to a Ziegler-Natta catalyst composition for the polymerization of olefins which has the following technical advantages:
(1) catalyst composition having self-extinguishing property;
(2) broad molecular weight distribution of polypropylene which was produced using diester catalyst system;
(3) better hydrogen response with monoester catalyst system; and
(4) narrow molecular weight distribution of polypropylene which was produced using monoester catalyst system

"Whenever a range of values is specified, a value up to 10 % below and above the lowest and highest numerical value respectively, of the specified range, is included in the scope of the invention".

As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item.

While considerable emphasis has been placed herein on the preferred embodiments, it will be appreciated that many embodiments can be made and that many changes can be made in the preferred embodiments without departing from the principles of the invention. These and other changes in the preferred embodiments as well as other embodiments of the invention will be apparent to those skilled in the art from the disclosure herein, whereby it is to be distinctly understood that the forgoing descriptive matter to be implemented merely as illustrative of the invention and not as limitation.

## Claims

1. A catalyst composition for the polymerization of olefins, said catalyst composition essentially consisting of;
i. a solid pro-catalyst component containing titanium (Ti), magnesium (Mg) and at least one internal electron donor;
ii. a co-catalyst component comprising a mixture of at least two trialkyl aluminum compounds selected from the group consisting of triethyl aluminum, triisobutyl aluminum and trioctyl aluminum, said co-catalyst component comprises at least one said trialkyl aluminum compound in an amount of at least 10 mole percent, based on the total amount of the co-catalyst component; and
iii. at least one external electron donor selected from the group of compounds consisting of alkoxysilanes and carboxylic acid esters.

2. The catalyst composition as claimed in claim 1, wherein the pro-catalyst component comprises a tetravalent titanium compound supported on a magnesium dichloride support.

3. The catalyst composition as claimed in claim 1, wherein the internal electron donor is at least one selected from the group of esters consisting of mono aromatic carboxylic acid esters or di-aromatic carboxylic acid esters and wherein the internal electron donor is at least one selected from the group consisting of methyl benzoate, ethyl benzoate, n-propyl benzoate, i-propyl benzoate, n-butyl benzoate, i-butyl benzoate, dimethyl phthalate, diethyl phthalate, dipropyl phthalate, diisopropyl phthalate, dibutyl phthalate, diisobutyl phthalate, dihexyl phthalate and dioctyl phthalate.

4. The catalyst composition as claimed in claim 1, wherein the co-catalyst component comprises two trialkyl aluminum compounds in a mole proportion varying between 1:9 and 9:1.

5. The catalyst composition as claimed in claim 1, wherein the molar ratio of the co-catalyst component and the external electron donor varies between 3:1 and 6:1.

6. The catalyst composition as claimed in claim 1, wherein the molar ratio of the co-catalyst component and the titanium varies between 230:1 and 270:1.

7. The catalyst composition as claimed in claim 1, wherein the external electron donor is a combination of at least one alkoxysilane and at least one carboxylic acid ester and wherein the alkoxysilane is at least one selected from the group consisting of cyclohexylmethyl dimethoxysilane, di-tert-butyldimethoxysilane, dicyclopentyldimethoxysilane, diphenyldimethoxysilane, diisopropyldimethoxysilane, di-n-propyldimethoxysilane, diisobutyldimethoxysilane, di-n-butyldimethoxysilane and n-propyl-trimethoxysilane and wherein the carboxylic acid ester is at least one selected from the group consisting of isopropyl palmitate (IPP), isopropyl laurate, isopropyl myristate, ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate and para-isopropoxy ethylbenzoate.

8. A process for preparing polyolefin with controlled molecular weight distribution, said process comprising a step of polymerizing olefin monomers in the presence of a catalyst composition as claimed in claim 1, under polymerization reaction conditions of temperature ranging between 40 °C and 80 °C and of pressure ranging between 4 kg/cm² and 7 kg/cm² to obtain polyolefin having pre-determined molecular weight distribution.

9. The process for preparing polyolefin as claimed in claim 8, wherein the catalyst composition consists essentially of :
(i) a solid pro-catalyst component containing titanium (Ti), magnesium (Mg) and at least one internal electron donor selected from the group of mono aromatic carboxylic acid esters that include methyl benzoate, ethyl benzoate, n-propyl benzoate, i-propyl benzoate, n-butyl benzoate, i-butyl benzoate and any combinations thereof;
(ii) a co-catalyst component comprising a mixture of at least two trialkyl aluminum compounds selected from the group consisting of triethyl aluminum, triisobutyl aluminum and trioctyl aluminum, said co-catalyst component comprises at least one said trialkyl aluminum compound in an amount of at least 10 mole percent, based on the total amount of the co-catalyst component; and
(iii) at least one external electron donor comprising a mixture of at least one alkoxy silane selected from the group consisting of cyclohexylmethyl dimethoxysilane, di-tert-butyldimethoxysilane, dicyclopentyldimethoxysilane, diphenyldimethoxysilane, diisopropyldimethoxysilane, di-n- propyldimethoxysilane, diisobutyldimethoxysilane, di-n-butyldimethoxysilane and n-propyl-trimethoxysilane, and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl-4-ethoxybenzoate, butyl-4-ethoxy benzoate and isobutyl-4-ethoxy benzoate and para-isopropoxy ethylbenzoate.

10. The process as claimed in claim 9, wherein the polyolefin has a polydispersity index ranging between 5.0 to 6.2, characterized for a narrow molecular weight distribution, said polydispersity index being measured by gel permeable chromatography (GPC).

11. The process for preparing polyolefin as claimed in claim 8, wherein the catalyst composition consists essentially of :
i. a solid pro-catalyst component containing titanium (Ti), magnesium (Mg) and at least one internal electron donor selected from the group of di- aromatic carboxylic acid esters that include dimethyl phthalate, diethyl phthalate, dipropyl phthalate, diisopropyl phthalate, dibutyl phthalate, diisobutyl phthalate, dihexyl phthalate, dioctyl phthalate and any combinations thereof.
ii. a co-catalyst component comprising a mixture of at least two trialkyl aluminum compounds selected from the group consisting of triethyl aluminum, triisobutyl aluminum and trioctyl aluminum, said co-catalyst componentcomprises at least one said trialkyl aluminum compound in an amount of at least 10 mole percent, based on the total amount of the co-catalyst component; and
iii. at least one external electron donor comprising a mixture of at least one alkoxy silane selected from the group consisting of cyclohexylmethyl dimethoxysilane, di-tert-butyldimethoxysilane, dicyclopentyldimethoxysilane, diphenyldimethoxysilane, diisopropyldimethoxysilane, di-n- propyldimethoxysilane, diisobutyldimethoxysilane, di-n-butyldimethoxysilane and n-propyl-trimethoxysilane, and at least one carboxylic acid ester selected from the group consisting of ethyl-4-ethoxy benzoate, ethyl-4-propoxy benzoate, ethyl-4-isopropoxy benzoate, ethyl-4-isobutoxy benzoate, propyl-4-ethoxy benzoate, isopropyl palmitate (IPP), isopropyl laurate and isopropyl myristate.

12. The process as claimed in claim 11, wherein the polyolefin has a polydispersity index ranging between 4.7 and 5.8 characterized for a broad molecular weight distribution, said polydispersity index being measured by gel permeable chromatography (GPC).

13. The process as claimed in claim 8, wherein said olefin monomers are selected from the group consisting of ethylene, propylene, butylene, isoprene and combinations thereof, preferably propylene.

14. The process as claimed in claim 8, wherein said polyolefin is at least one selected from the group consisting of polyethylene, polypropylene, polybutylene and polyisoprene, preferably polypropylene.

## Patentansprüche

1. Katalysatorzusammensetzung für die Polymerisation von Olefinen, wobei die Katalysatorzusammensetzung im Wesentlichen aus Folgendem besteht:
i) eine feste Pro-Katalysator-Komponente, die Titan (Ti), Magnesium (Mg) und mindestens einen internen Elektronendonator enthält;
ii) eine Co-Katalysator-Komponente, die eine Mischung aus mindestens zwei Trialkylaluminium-Verbindungen umfasst, die aus der Gruppe bestehend aus Triethylaluminium, Triisobutylaluminium und Trioctylaluminium gewählt werden, wobei die Co-Katalysator-Komponente mindestens eine Trialkylaluminiumverbindung in einer Menge von mindestens 10 Molprozent, ausgehend von der Gesamtmenge der Co-Katalysator-Komponente, umfasst; und
iii) mindestens ein externer Elektronendonator, der aus der Gruppe bestehend aus Verbindungen bestehend aus Alkoxysilanen und Karbonsäureester gewählt wird.

2. Katalysatorzusammensetzung nach Anspruch 1, wobei die Pro-Katalysatorkomponente eine vierwertige Titanverbindung auf einem Magnesiumdichloridträger umfasst.

3. Katalysatorzusammensetzung nach Anspruch 1, wobei der interne Elektronendonator mindestens einer ist, der aus der Gruppe von Estern bestehend aus mono-aromatischen Karbonsäureestern oder di-aromatischen Karbonsäureestern gewählt wird, und wobei der interne Elektronendonator mindestens einer ist, der aus der Gruppe bestehend aus Methylbenzoat, Ethylbenzoat, n-Propylbenzoat, i-Propylbenzoat, n-Butylbenzoat, i-Butylbenzoat, Dimethylphthalat, Diethylphthalat, Dipropylphthalat, Diisopropylphthalat, Dibutylphthalat, Diisobutylphthalat, Dihexylphthalat und Dioctylphthalat gewählt wird.

4. Katalysatorzusammensetzung nach Anspruch 1, wobei die Co-Katalysator-Komponente zwei Trialkylaluminium-Verbindungen in einem Molverhältnis umfasst, das zwischen 1:9 und 9:1 schwankt.

5. Katalysatorzusammensetzung nach Anspruch 1, wobei das Molverhältnis zwischen der Co-Katalysator-Komponente und dem externen Elektronendonator zwischen 3:1 und 6:1 schwankt.

6. Katalysatorzusammensetzung nach Anspruch 1, wobei das Molverhältnis zwischen der Co-Katalysator-Komponente und dem Titan zwischen 230:1 und 270:1 schwankt.

7. Katalysatorzusammensetzung nach Anspruch 1, wobei der externe Elektronendonator eine Kombination von mindestens einem Alkoxysilan und mindestens einem Karbonsäureester ist und wobei das Alkoxysilan mindestens eins ist, das aus der Gruppe bestehend aus Cyclohexylmethyldimethoxysilan, Di-tert-Butyldimethoxysilan, Dicyclopentyldimethoxysilan, Diphenyldimethoxysilan, Diisopropyldimethoxysilan, Di-n-Propyldimethoxysilan, Diisobutyldimethoxysilan, Di-n-Butyldimethoxysilan und n-Propyltrimethoxysilan gewählt wird, und wobei das Karbonsäureester mindestens eins ist, das aus der Gruppe bestehend aus Isopropylpalmitat (IPP), Isopropyllaurat, Isopropylmyristat, Ethyl-4-Ethoxybenzoat, Ethyl-4-Propoxybenzoat, Ethyl-4-Isopropoxybenzoat, Ethyl-4-Isobutoxybenzoat, Propyl-4-Ethoxybenzoat, Isopropyl-4-Ethoxybenzoat, Butyl-4-Ethoxybenzoat und Isobutyl-4-Ethoxybenzoat und Para-Isopropoxyethylbenzoat gewählt wird.

8. Verfahren zur Herstellung von Polyolefin mit kontrollierter Verteilung des Molekulargewichts, wobei das Verfahren einen Schritt der Polymerisation von Olefinmonomeren unter Anwesenheit einer Katalysatorzusammensetzung nach Anspruch 1 umfasst, und zwar unter Reaktionsbedingungen der Polymerisation bei einer Temperatur im Bereich zwischen 40 °C und 80 °C und einem Druck im Bereich zwischen 4 kg/cm² und 7 kg/cm², um Polyolefin mit der vorgegebenen Verteilung des Molekulargewichts zu erhalten.

9. Verfahren zur Herstellung von Polyolefin nach Anspruch 8, wobei die Katalysatorzusammensetzung im Wesentlichen aus Folgendem besteht:
(i) eine feste Pro-Katalysator-Komponente, die Titan (Ti), Magnesium (Mg) und mindestens einen internen Elektronendonator enthält, der aus der Gruppe von mono-aromatischen Karbonsäureestern gewählt wird, zu der Methylbenzoat, Ethylbenzoat, n-Propylbenzoat, i-Propylbenzoat, n-Butylbenzoat, i-Butylbenzoat und beliebige Kombinationen derselben gehören;
(ii) eine Co-Katalysator-Komponente, die eine Mischung aus mindestens zwei Trialkylaluminium-Verbindungen umfasst, die aus der Gruppe bestehend aus Triethylaluminium, Triisobutylaluminium und Trioctylaluminium gewählt werden, wobei die Co-Katalysator-Komponente mindestens eine Trialkylaluminiumverbindung in einer Menge von mindestens 10 Molprozent, ausgehend von der Gesamtmenge der Co-Katalysator-Komponente, umfasst; und
(iii) mindestens einen externen Elektronendonator, der eine Mischung aus mindestens einem Alkoxysilan, das aus der Gruppe bestehend aus Cyclohexylmethyldimethoxysilan, Di-tert-Butyldimethoxysilan, Dicyclopentyldimethoxysilan, Diphenyldimethoxysilan, Diisopropyldimethoxysilan, Di-n-Propyldimethoxysilan, Diisobutyldimethoxysilan, Di-n-Butyldimethoxysilan und n-Propyltrimethoxysilan gewählt wird, und mindestens einem Karbonsäureester enthält, das aus der Gruppe bestehend aus Ethyl-4-Ethoxybenzoat, Ethyl-4-Propoxybenzoat, Ethyl-4-Isopropoxybenzoat, Ethyl-4-Isobutoxybenzoat, Propyl-4-Ethoxybenzoat, Isopropyl-4-Ethoxybenzoat, Butyl-4-Ethoxybenzoat und Isobutyl-4-Ethoxybenzoat und Para-Isopropoxyethylbenzoat gewählt wird.

10. Verfahren nach Anspruch 9, wobei das Polyolefin einen Polydispersitätsindex im Bereich zwischen 5,0 und 6,2 aufweist, der eine enge Verteilung des Molekulargewichts kennzeichnet, wobei dieser Polydispersitätsindex durch Gel-Permeations-Chromatographie (GPC) gemessen wird.

11. Verfahren zur Herstellung von Polyolefin nach Anspruch 8, wobei die Katalysatorzusammensetzung im Wesentlichen aus Folgendem besteht:
i. eine feste Pro-Katalysator-Komponente, die Titan (Ti), Magnesium (Mg) und mindestens einen internen Elektronendonator enthält, der aus der Gruppe von di-aromatischen Karbonsäureestern gewählt wird, zu der Dimethylphthalat, Diethylphthalat, Dipropylphthalat, Diisopropylphthalat, Dibutylphthalat, Diisobutylphthalat, Dihexylphthalat und Dioctylphthalat und beliebige Kombinationen derselben gehören;
ii. eine Co-Katalysator-Komponente, die eine Mischung aus mindestens zwei Trialkylaluminium-Verbindungen umfasst, die aus der Gruppe bestehend aus Triethylaluminium, Triisobutylaluminium und Trioctylaluminium gewählt werden, wobei die Co-Katalysator-Komponente mindestens eine Trialkylaluminiumverbindung in einer Menge von mindestens 10 Molprozent, ausgehend von der Gesamtmenge der Co-Katalysator-Komponente, umfasst; und
iii. mindestens einen externen Elektronendonator, der eine Mischung aus mindestens einem Alkoxysilan, das aus der Gruppe bestehend aus Cyclohexylmethyldimethoxysilan, Di-tert-Butyldimethoxysilan, Dicyclopentyldimethoxysilan, Diphenyldimethoxysilan, Diisopropyldimethoxysilan, Di-n-Propyldimethoxysilan, Diisobutyldimethoxysilan, Di-n-Butyldimethoxysilan und n-Propyltrimethoxysilan gewählt wird, und mindestens einem Karbonsäureester umfasst, das aus der Gruppe bestehend aus Ethyl-4-Ethoxybenzoat, Ethyl-4-Propoxybenzoat, Ethyl-4-Isopropoxybenzoat, Ethyl-4-Isobutoxybenzoat, Propyl-4-Ethoxybenzoat, Isopropylpalmitat (IPP), Isopropyllaurat und Isopropylmyristat gewählt wird.

12. Verfahren nach Anspruch 11, wobei das Polyolefin einen Polydispersitätsindex im Bereich zwischen 4,7 und 5,8 aufweist, der einen breite Verteilung des Molekulargewichts kennzeichnet, wobei dieser Polydispersitätsindex durch Gel-Permeations-Chromatographie (GPC) gemessen wird.

13. Verfahren nach Anspruch 8, wobei die Olefinmonomere aus der Gruppe bestehend aus Ethylen, Propylen, Butylen, Isopren und Kombinationen derselben gewählt werden, vorzugsweise Propylen.

14. Verfahren nach Anspruch 8, wobei das Polyolefin mindestens eins ist, das aus der Gruppe bestehend aus Polyethylen, Polypropylen, Polybutylen und Polyisopren gewählt wird, vorzugsweise Polypropylen.

## Revendications

1. Composition de catalyseur destinée à la polymérisation des oléfines, ladite composition de catalyseur étant essentiellement constituée de :
i) un composant pro-catalyseur solide contenant du titane (Ti), du magnésium (Mg) et au moins un donneur d'électrons interne ;
ii) un composant co-catalyseur comprenant un mélange d'au moins deux composés de trialkylaluminium choisis dans le groupe constitué par le triéthylaluminium, le triisobutylaluminium et le trioctylaluminium, ledit composant co-catalyseur comprenant au moins un dit composé trialkylaluminium en une quantité d'au moins 10 % en mole, par rapport à la quantité totale du composant co-catalyseur ; et
iii) au moins un donneur d'électrons externe choisi dans le groupe constitué d'alcoxysilanes et d'esters d'acides carboxyliques.

2. Composition de catalyseur selon la revendication 1 dans laquelle le composant pro-catalyseur comprend un composé de titane tétravalent pris en charge sur un support de dichlorure de magnésium.

3. Composition de catalyseur selon la revendication 1 dans laquelle le donneur d'électrons interne est au moins un donneur choisi dans le groupe constitué par les esters d'acides carboxyliques monoaromatiques ou les esters d'acides carboxyliques di-aromatiques et dans lequel le donneur d'électrons interne est au moins un donneur choisi dans le groupe constitué par le benzoate de méthyle, le benzoate d'éthyle, le benzoate de n-propyle, le benzoate d'i-propyle, le benzoate de n-butyle, le benzoate d'i-butyle, le phtalate de diméthyle, le phtalate de diéthyle, le phtalate de dipropyle, le phtalate de diisopropyle, le phtalate de diisobutyle, le phtalate de dybutyle, le phtalate de dihexyle et le dioctyle.

4. Composition de catalyseur selon la revendication 1, dans laquelle le composant co-catalyseur comprend deux composés de trialkylaluminium dans une proportion molaire variant entre 1:9 et 9:1.

5. Composition de catalyseur selon la revendication 1, dans laquelle le rapport molaire du composant co-catalyseur et du donneur d'électrons externe varie entre 3:1 et 6:1.

6. Composition de catalyseur selon la revendication 1, dans laquelle le rapport molaire du composant co-catalyseur et du titane varie entre 230:1 et 270:1.

7. Composition de catalyseur selon la revendication 1, dans laquelle le donneur d'électrons externe est une combinaison d'au moins un alcoxysilane et d'au moins un ester d'acide carboxylique et dans laquelle l'alcoxysilane est au moins un composé choisi dans le groupe qui est constitué du cyclohexylmethyl dimethoxysilane, du di-tert-butyldiméthoxysilane, du dicyclopentyldiméthoxysilane, du diphényldiméthoxysilane, du diisopropyldiméthoxysilane, du di-npropyldiméthoxysilane et du diisobutyldiméthoxysilane, du di-nbutyldiméthoxysilane et n-propyl-triméthoxysilane et dans lequel l'ester d'acide carboxylique est au moins un composé choisi dans le groupe constitué par le palmitate d'isopropyle (IPP), le laurate d'isopropyle, le myristate d'isopropyle, le 4-éthoxy benzoate d'éthyle, le benzoate d'éthyl-4-propoxy, le benzoate d'éthyl-4-isopropoxy, le benzoate d'éthyl-4-isobutoxybutoxybenzoate, le benzoate de propyl-4-éthoxy, le benzoate d'isopropyl-4-éthoxy, le benzoate de butyl-4-éthoxy et le benzoate d'isobutyl-4-éthoxy et le benzoate para-isopropoxyéthyl.

8. Procédé de préparation d'une polyoléfine à distribution contrôlée du poids moléculaire, ledit procédé comprenant une étape de polymérisation de monomères oléfiniques en présence d'une composition catalytique selon la revendication 1, dans des conditions de réaction de polymérisation de température comprise entre 40 °C et 80 °C et de pression comprise entre 4 kg/cm² et 7 kg/cm² pour obtenir une polyoléfine à distribution prédéfinie du poids moléculaire.

9. Procédé de préparation d'une polyoléfine selon la revendication 8, dans lequel la composition de catalyseur comprend essentiellement
(i) un composant pro-catalyseur solide contenant du titane (Ti), du magnésium (Mg) et au moins un donneur d'électrons interne choisi dans le groupe constitué des esters d'acides carboxyliques monoaromatiques qui comprennent le benzoate de méthyle, le benzoate d'éthyle, le benzoate de n-propyle, le benzoate d'i-propyle, le benzoate de n-butyle, le benzoate d'i-butyle et leurs combinaisons éventuelles ;
(ii) un composant co-catalyseur comprenant un mélange d'au moins deux composés trialkylaluminium choisis dans le groupe constitué par le triéthylaluminium, le triisobutylaluminium et le trioctylaluminium, ledit composant co-catalyseur comprenant au moins un dit composé trialkylaluminium en une quantité d'au moins 10 % en mole, par rapport à la quantité totale du composant co-catalyseur ; et
(iii) au moins un donneur d'électrons externe comprenant un mélange d'au moins un alcoxy silane choisi dans le groupe constitué du cyclohexylméthyl diméthoxysilane, du di-tert-butyldiméthoxysilane, du dicyclopentyldiméthoxysilane, du diphényldiméthoxysilane, du diisopropyldiméthoxysilane, du di-npropyldiméthoxysilane, du diisobutyldiméthoxysilane, du di-n-butyldiméthoxysilane et du n-propyl-triméthoxysilane, et au moins un ester d'acide carboxylique choisi dans le groupe constitué par le benzoate éthyl-4-éthoxy, le benzoate éthyl-4-propoxy, le benzoate éthyl-4-isopropoxy, l'éthyl-4-isobutoxybenzoate, le benzoate propyl-4-éthoxy, le benzoate isopropyl-4-éthoxy, le benzoate butyle-4-éthoxy, le benzoate isobutyl-4 éthoxy et le para-isopropoxy-benzzoate éthyle.

10. Procédé selon la revendication 9, dans lequel la polyoléfine a un indice de polydispersité compris entre 5,0 et 6,2, caractérisé pour une distribution étroite du poids moléculaire, ledit indice de polydispersité étant mesuré par chromatographie de perméation sur gel (CPG).

11. Procédé de préparation d'une polyoléfine selon la revendication 8, dans lequel la composition de catalyseur comprend essentiellement:
i. un composant pro-catalyseur solide contenant du titane (Ti), du magnésium (Mg) et au moins un donneur d'électrons interne choisi dans le groupe constitué des esters d'acides carboxyliques di-aromatiques qui comprennent le phtalate de diméthyle, le phtalate de diéthyle, le phtalate de dipropyle, le phtalate de diisopropyle, le phtalate de dibutyle, le phtalate de diisobutyle, le phtalate de dhexyle, le phtalate de dioctyle et toutes combinaisons de ceux-ci.
ii. un composant co-catalyseur comprenant un mélange d'au moins deux composés trialkylaluminium choisis dans le groupe constitué par le triéthylaluminium, le triisobutylaluminium et le trioctylaluminium, ledit composant co-catalyseur comprenant au moins un dit composé trialkylaluminium en une quantité d'au moins 10 % en mole, par rapport à la quantité totale du composant co-catalyseur ; et
iii. Au moins un donneur d'électrons externe comprenant un mélange d'au moins un alcoxy silane choisi dans le groupe constitué du cyclohexylméthyl diméthoxysilane, du di-tert-butyldiméthoxysilane, du dicyclopentyldiméthoxysilane, du diphényldiméthoxysilane, du diisopropyldiméthoxysilane, du di-n-propyldiméthoxysilane, du diisobutyldiméthoxy silane, di-n-butyldiméthoxysilane et du n-propyl-triméthoxysilane, et au moins un ester d'acide carboxylique choisi dans le groupe constitué par le benzoate éthyle-4-éthoxy, le benzoate éthyle-4-propoxy, le benzoate éthyle-4-isopropoxy, le benzoate éthyle-4-isobutoxy,-5-le benzoate propyle-4-éthoxy, le palmitate d'isopropyle (IPP), le laurate d'isopropyle et le myristate d'isopropyle.

12. Procédé selon la revendication 11 dans lequel la polyoléfine présente un indice de polydispersité compris entre 4,7 et 5,8 caractérisé pour une large distribution de poids moléculaire, ledit indice de polydispersité étant mesuré par une chromatographie de perméation sur gel (CPG).

13. Procédé selon la revendication 8 dans lequel lesdits monomères d'oléfine sont choisis dans le groupe constitué d'éthylène, de propylène, de butylène, d'isoprène et de leurs combinaisons, de préférence le propylène.

14. Procédé selon la revendication 8 dans lequel ladite polyoléfine est au moins une choisie dans le groupe constitué de polyéthylène, de polyprolylène, de polybutylène et de polyisoprène, de préférence de polypropylène.
